# EUROPÄISCHE PATENTANMELDUNG

(11) **EP 3 565 044 A1**
(43) Veröffentlichungstag der Anmeldung: **06.11.2019**
(21) Anmeldenummer: 18170009.7
(22) Anmeldetag: 30.04.2018
(51) Int. Cl.: H01M 8/04858, H01M 8/18, H01M 8/04694

(54) **REDOX-FLOW-BATTERIE UND VERFAHREN ZUM BETREIBEN EINER REDOX-FLOW-BATTERIE**

(71) Anmelder: Siemens Aktiengesellschaft, 80333 München (DE)
(72) Erfinder: Fleck, Robert, 91325 Adelsdorf (DE); Schricker, Barbara, 91058 Erlangen (DE); Wolfschmidt, Holger, 91058 Erlangen (DE)

(57) **Zusammenfassung**

Die Erfindung betrifft eine Redox-Flow-Batterie und ein Verfahren zum Betreiben einer Redox-Flow-Batterie zum Bestimmen eines Ladezustands. Dabei wird zunächst eine Redox-Flow-Batterie umfassend eine erste Kammer und eine zweite Kammer bereitgestellt. Die erste Kammer ist von der zweiten Kammer durch eine Membran getrennt. Die erste Kammer umfasst eine Kathode und die zweite Kammer umfasst eine Anode. In der ersten Kammer liegt ein flüssiger Katholyt vor und in der zweiten Kammer liegt ein flüssiger Anolyt vor. Zunächst wird nun wenigstens ein erster Referenzwert in Abhängigkeit eines ersten Ladezustands der Redox-Flow-Batterie während des Aufladens und/oder Entladens der Redox-Flow-Batterie gemessen. Weiterhin wird wenigstens ein zweiter Referenzwert bei der maximalen Ladung der Redox-Flow-Batterie gemessen. Anschließend wird während des Betriebs der Redox-Flow-Batterie wenigstens ein erster Betriebswert in Abhängigkeit des aktuellen Ladezustands gemessen. Anschließend wird in einer Auswertevorrichtung ein Ladezustand aus dem wenigstens ersten Referenzwert und dem wenigstens zweiten Referenzwert sowie dem Betriebswert ermittelt.

## Beschreibung

Die Erfindung betrifft eine Redox-Flow-Batterie und ein Verfahren zum Betreiben einer Redox-Flow-Batterie.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Batterien sind Speicher für elektrische Energie auf elektrochemischer Basis und geeignet, die überschüssige Energie zu speichern. Handelt es sich um einen wiederaufladbaren Speicher wird dieser auch Akkumulator genannt. Ein einzelnes wiederaufladbares Speicherelement wird auch Sekundärelement genannt.

Bei Redox-Flow-Batterien ist, im Unterschied zu klassischen Sekundärelementen, das elektrodenaktive Material flüssig. Dieser flüssige Elektrolyt wird in einem Tank gelagert und in einen Kathodenraum mit einer Kathode und/oder in einen Anodenraum mit einer Anode gepumpt. Kathodenraum und Anodenraum werden typischerweise durch eine Membran voneinander getrennt. An den Elektroden wird das elektrodenaktive Material reduziert, beziehungsweise oxidiert. Der flüssige Elektrolyt umfasst als elektrodenaktives Material zweckmäßigerweise ein Reduktions-Oxidations-Paar.

Durch Nebenreaktionen bezogen auf die gewünschte Redox-Reaktion in Redox-Flow-Batterien kann der coulomb'sche Wirkungsgrad abhängig vom Lade- und Entladeprofil und den Standzeiten mehrere Prozentpunkte unterhalb der hundert Prozent liegen. Die herkömmliche Ladezustandsbestimmung (engl.: State of Charge (SOC)), die über die Aufsummierung der Ladungsmenge, die der Batterie zugeführt oder entnommen wird, bestimmt wird, wird dadurch nachteilig ungenau.

Aufgabe der Erfindung ist es daher, ein Verfahren zum Betreiben einer Redox-Flow-Batterie und eine Redox-Flow-Batterie mit einer zuverlässigen Bestimmung eines Ladezustands und mit einer Anordnung zum zuverlässigen Bestimmen eines Ladezustands anzugeben.

Die Aufgabe wird mit einem Verfahren gemäß Anspruch 1 und einer Redox-Flow-Batterie gemäß Anspruch 7 gelöst.

Das erfindungsgemäße Verfahren zum Bestimmen eines Ladezustands einer Redox-Flow-Batterie umfasst das Bereitstellen einer Redox-Flow-Batterie umfassend eine erste Kammer und eine zweite Kammer, wobei die erste Kammer von der zweiten Kammer von einer Membran getrennt ist und wobei die erste Kammer eine Kathode umfasst und die zweite Kammer eine Anode umfasst und in der ersten Kammer ein flüssiger Katholyt vorliegt und in der zweiten Kammer ein flüssiger Anolyt vorliegt. In der ersten und/oder zweiten Kammer wird zunächst während des Aufladens und/oder Entladens in Abhängigkeit eines ersten Ladezustands der Redox-Flow-Batterie wenigstens ein erster Referenzwert gemessen. Weiterhin wird ein zweiter Referenzwert bei der maximalen Ladung der Redox-Flow-Batterie gemessen. Während des Betriebs der Redox-Flow-Batterie wird danach in Abhängigkeit des Ladezustands wenigstens ein erster Betriebswert gemessen. Der erste und der zweite Referenzwert werden mittels einer ersten Messvorrichtung gemessen. Aus dem wenigstens einen ersten Referenzwert und dem wenigstens einen ersten Betriebswert wird dann in einer Auswertevorrichtung der Ladezustand ermittelt.

Die erfindungsgemäße elektrisch wiederaufladbare Redox-Flow-Batterie umfasst eine erste Kammer und eine zweite Kammer, wobei die erste Kammer von der zweiten Kammer von einer Membran getrennt ist und wobei die erste Kammer eine Kathode umfasst und die zweite Kammer eine Anode umfasst und in der ersten Kammer ein flüssiger Katholyt vorliegt und in der zweiten Kammer ein flüssiger Anolyt vorliegt. Die Redox-Flow-Batterie umfasst weiterhin eine erste Messvorrichtung zum Messen wenigstens eines ersten Referenzwertes und zum Messen eines zweiten Referenzwerts sowie zum Messen wenigstens eines ersten Betriebswertes. Weiterhin umfasst sie eine Auswertevorrichtung zum Ermitteln eines Ladezustands aus dem ersten Referenzwert und dem ersten Betriebswert. Es ist alternativ ebenso denkbar, dass der erste und zweite Referenzwert mittels einer ersten Messvorrichtung und der Betriebswert mittels einer zweiten Messvorrichtung gemessen werden.

In anderen Worten bedeutet das Ermitteln des ersten Referenzwertes ein Kalibrieren dieses Wertes an eine erste bestimmte Ladungsmenge, welche in der Redox-Flow-Batterie gespeichert ist. Mittels dieses Kalibrierwertes, bzw. im Falle von mehreren Werten der Kalibierkurve, erfolgt dann ein Abgleich mit dem aktuellen ersten Betriebswert. Beruhend auf dem Abgleich wird dann in der Auswertevorrichtung zunächst die in der Batterie gespeicherte Ladungsmenge des Betriebswertes ermittelt. Aus dieser Ladungsmenge und der maximal erreichbaren Ladungsmenge, der Batterie-Kapazität, welche basierend auf dem zweiten Referenzwert ermittelt wird, wird dann der Ladezustand als das Verhältnis der in der Batterie gespeicherten Ladungsmenge während des Betriebs und der in der Batterie speicherbaren Ladungsmenge ermittelt.

Vorteilhaft ermöglicht das Ermitteln des Ladezustands aus dem wenigstens ersten Referenzwert, dem zweiten Referenzwert und dem wenigstens ersten Betriebswert ein zuverlässiges Abbilden des Ladezustands. Ein wiederholtes Erfassen des zweiten Referenzwertes nach einiger Zeit, insbesondere nach einigen Betriebsstunden oder Betriebstagen, ermöglicht auch das Erfassen von Änderungen der maximalen Kapazität über die Betriebszeit. Somit wird der Ladezustand auch im Falle, dass die gesamte Kapazität der Redox-Flow-Batterie sich über die Zeit verändert, vorteilhafterweise zuverlässig ermittelt.

In einer vorteilhaften Ausgestaltung und Weiterbildung der Erfindung wird als der erste und zweite Referenzwert und der erste Betriebswert der pH-Wert und/oder das Elektrodenpotential gemessen. Während der Reduktions-Oxidations-Reaktion ändert sich der pH-Wert des Elektrolyts, also des Anolyts und/oder des Katholyts. Somit ist der pH-Wert indirekt abhängig vom Ladezustand. Vorteilhaft kann der Ladezustand demnach zuverlässig beruhend auf pH-Wert-Messungen ermittelt werden. Auch das Elektrodenpotential ist abhängig von den während der Reduktions-Oxidations-Reaktion vorliegenden Edukten und Produkten. Da diese während des Beladens oder Entladens zu-, bzw. abnehmen, lässt sich der Ladezustand vorteilhaft ebenso zuverlässig basierend auf der Bestimmung des Elektrodenpotentials ermitteln. Das Elektrodenpotential kann dabei in stromlosem Zustand oder unter Last bestimmt werden.

In einer weiteren vorteilhaften Ausgestaltung und Weiterbildung der Erfindung wird der erste Referenzwert bei Minimalspannung oder der halben Maximalspannung der Redox-Flow-Batterie gemessen. Vorteilhaft kann die Anzahl der Messpunkte somit auf markante Spannungen reduziert werden. Ein aufnehmen einer vollständigen Kalibierkurve ist somit nicht nötig. Die zuverlässige Messung des Ladezustands ist vorteilhaft bereits durch wenige Referenzpunkte durchführbar.

In einer weiteren vorteilhaften Ausgestaltung und Weiterbildung der Erfindung wird der pH-Wert im Katholyt in einem ersten Tank verbunden mit der ersten Kammer oder im Anolyt in einem zweiten Tank verbunden mit der zweiten Kammer gemessen. Das Messen des pH-Wertes kann vorteilhafterweise an unterschiedlichen Stellen der Redox-Flow-Batterie erfolgen. Ob Anolyt oder Katholyt alleine gemessen werden, hängt vom Elektrolyten und dem Energieträger darin ab. Vorteilhaft wird der pH-Wert dort gemessen, wo die Veränderung des pH-Werts mit der Veränderung des Ladezustands am größten ist, dass heißt eine Korrelation am meisten Aussagekraft und Genauigkeit hat. Dadurch wird vorteilhaft eine besonders zuverlässige Messung des Ladezustands der Redox-Flow-Batterie erreicht.

In einer weiteren vorteilhaften Ausgestaltung und Weiterbildung der Erfindung wird alternativ zum pH-Wert das Elektrodenpotential an der Anode in der zweiten Kammer oder der Kathode in der ersten Kammer gemessen.

In einer weiteren vorteilhaften Ausgestaltung und Weiterbildung der Erfindung umfasst der Anolyt und/oder der Katholyt Polyoxometallat. Besonders vorteilhaft lässt sich Polyoxometallat bei höheren Temperaturen betreiben als konventionelle Energieträger. Weiterhin ist es möglich eine hohe Menge an Energie in dem Polyoxometallat zu speichern. Polyoxometallate sind außerdem stabil und wiederaufbereitbar.

In einer weiteren vorteilhaften Ausgestaltung und Weiterbildung der Erfindung ist die erste und die zweite Messvorrichtung eine Spannungsmessvorrichtung umfassend eine Referenzelektrode. Besonders vorteilhaft ist die Spannungsmessvorrichtung geeignet, das Elektrodenpotential zu messen. Mittels des Elektrodenpotentials wird anschließend vorteilhaft der Ladezustand mittels des ersten und zweiten Referenzwertes und des Betriebswertes zuverlässig ermittelt.

In einer weiteren vorteilhaften Ausgestaltung und Weiterbildung der Erfindung ist die erste und die zweite Messvorrichtung eine pH-Elektrode. Vorteilhaft kann mittels einer pH-Elektrode der pH-Wert gemessen werden und darauf basierend der Ladezustand zuverlässig ermittelt werden.

In einer weiteren vorteilhaften Ausgestaltung und Weiterbildung der Erfindung ist die pH-Elektrode in einer Zu- oder Ableitung der ersten und/oder zweiten Kammer angeordnet. Die Zuleitung oder die Ableitung kann auch eine Bypassleitung darstellen. Der Bypass wird dann nach der Messung des pH-Wertes gespült. Das Spülen des Bypasses kann zeitgesteuert oder Ladung gesteuert erfolgen. Vorteilhaft wird durch die Anordnung der pH-Elektrode in einer Leitung die Verunreinigung der Sonde vorteilhaft vermieden, was zu einer zuverlässigen Ladezustandsbestimmung führt. Weiterhin wird die Messgenauigkeit der pH Sonde vorteilhaft erhöht und die Langlebigkeit der pH-Sonde vorteilhaft verlängert.

In einer weiteren vorteilhaften Ausgestaltung und Weiterbildung der Erfindung ist die pH-Elektrode in einem ersten Teilraum der des ersten Tanks und/oder einem zweiten Teilraum des zweiten Tanks angeordnet und der erste und zweite Teilraum sind über eine verschließbare Öffnung mit dem ersten und zweiten Tank fluidisch verbunden. In anderen Worten bildet sich ein Kompartment aus, in welchem die pH-Elektrode angeordnet ist. Durch die fluidische Verbindung durch die verschließbare Öffnung des Kompartments bzw. der Teilräume mit den ersten und zweiten Kammern, wird das Elektrolyt nur dann in diese Kammern gespült, wenn der pH-Wert gemessen werden soll. Vorteilhaft ist die pH-Elektrode dieser Anordnung derart angeordnet, dass sie weniger Verunreinigungen ausgesetzt ist. Somit arbeitet sie zuverlässiger, was auch die Bestimmung des Ladezustands verbessert. Weiterhin wird die Langlebigkeit der pH-Elektrode vorteilhaft erhöht.

In einer weiteren vorteilhaften Ausgestaltung und Weiterbildung der Erfindung ist die verschließbare Öffnung durch ein regelbares Ventil verschließbar. Das Ventil ermöglicht ein Öffnen der verschließbaren Öffnung der Teilräume genau dann, wenn eine pH Messung erfolgen soll. Vorteilhaft ist es so möglich, den aktuellen pH-Wert des Elektrolyten zu messen, aber auch die pH-Sonde, in anderen Worten die pH-Elektrode, nicht stetig dem Elektrolyten auszusetzen. Vorteilhaft wird nach der Messung das Ventil geschlossen und anschließend der Teilraum gereinigt. Somit liegt die pH-Elektrode während sie nicht genutzt wird, in einer neutralen Spüllösung, was deren Langlebigkeit und Messgenauigkeit erhöht.

In einer weiteren vorteilhaften Ausgestaltung und Weiterbildung der Erfindung ist die pH-Elektrode mechanisch bewegbar in die Leitung und aus der Leitung heraus angeordnet. Das Bewegen der Messsonde kann hydraulisch oder mechanisch erfolgen. Vorteilhaft wird die Messsonde nur dann in die Leitung hinein geführt, wenn eine Messung durchgeführt wird. In Zeiten, in denen keine Messung durchgeführt wird, wird die Messsonde aus der Leitung heraus gefahren und ist somit nicht dem Elektrolyten ausgesetzt. Dies verlängert wiederum die Langlebigkeit der pH-Elektrode und verbessert die Messgenauigkeit der pH-Elektrode. Somit verbessert dies auch die Genauigkeit, mit der der Ladezustand ermittelt werden kann.

In einer weiteren vorteilhaften Ausgestaltung und Weiterbildung der Erfindung wird eine pH-Elektrode zum Einsatz in einer Redox-Flow-Batterie mit wenigstens zwei Diaphragmen verwendet. Die pH-Elektrode ist dabei insbesondere eine Glas-pH-Elektrode. Alternativ kann die pH-Elektrode Kunststoff oder Papierfilter, insbesondere als Diaphragma, umfassen. Weiterhin kann das Diaphragma in Art einer Fritte ausgestaltet sein.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Redox-Flow-Batterie mit Messvorrichtung;
- Figur 2: ein Elektrodenpotential-Diagramm;
- Figur 3: eine erste Alternative Anordnung der Messvorrichtung;
- Figur 4: eine zweite Alternative Anordnung der Messvorrichtung;
- Figur 5: ein Verfahrensschema zum Betreiben der Redox-Flow-Batterie.

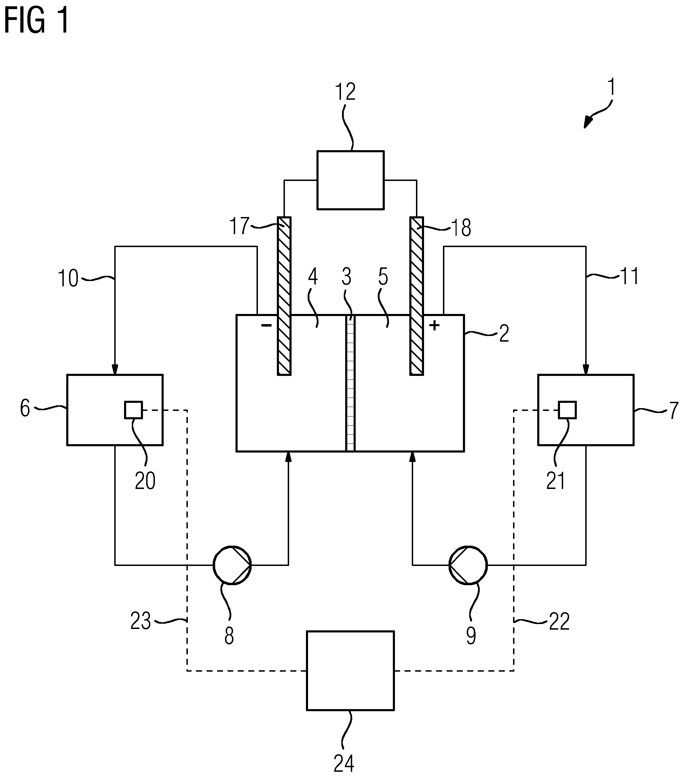

Figur 1 zeigt eine Redox-Flow-Batterie 1 mit einer Redox-Flow Einheit 2. Die Redox-Flow Einheit 2 umfasst eine erste Kammer 4, eine Membran 3 und eine zweite Kammer 5. In der ersten Kammer 4 ist eine Kathode 17 angeordnet. In der zweiten Kammer 5 ist eine Anode 18 angeordnet. Die Kathode 17 und die Anode 18 sind über eine Elektroanbindung 12 an das Stromnetz angeschlossen. Alternativ ist denkbar, dass die Anode 18 und die Kathode 17 direkt an ein Inselnetz angeschlossen sind. Die erste Kammer 4 ist mit dem ersten Tank 6 verbunden. In der ersten Kammer 4 und dem ersten Tank 6 liegt ein Katholyt 10 vor. Dieser wird mittels der ersten Pumpe 8 durch die erste Kammer 4 und den ersten Tank 6 und die entsprechenden Leitungen gepumpt. Die zweite Kammer 5 ist mit dem zweiten Tank 7 verbunden. In dem zweiten Tank 5 und dem zweiten Tank 7 liegt ein Anolyt 11 vor. Dieser Anolyt 11 wird mittels der zweiten Pumpe 9 durch die zweite Kammer 5 und den zweiten Tank 7 und die entsprechenden Leitungen gepumpt. Zur Überwachung des Ladezustands der Redox-Flow-Batterie 1 ist in dem ersten Tank 6 eine Messvorrichtung 20 angeordnet. In diesem Beispiel ist die Messvorrichtung 20 eine Spannungsmessvorrichtung zum Messen des Elektrodenpotentials in dem Katholyt. Die zweite Datenübertragungsvorrichtung 23 übermittelt den Messwert von der ersten Messvorrichtung 20 an die Auswerteeinheit 24. Zusätzlich wird in diesem Beispiel das Elektrodenpotential an der zweiten Messvorrichtung 21 in der zweiten Kammer 5 gemessen. Es ist ebenso denkbar dass das Elektrodenpotential lediglich in einer der Kammern gemessen wird.

Zunächst werden der erste und der zweite Referenzwert gemessen. Insbesondere wird ein zweiter Referenzwert bei einer maximalen Spannung gemessen. Weiterhin wird wenigstens ein erster Referenzwert, insbesondere bei einer minimalen Spannung und/oder bei einer mittleren Spannung, gemessen. Nun wird die Redox-Flow Batterie 1 betrieben. Während des Betriebs werden Messwerte mit den Messvorrichtungen 20 und 21 ermittelt. Diese werden an die Auswertevorrichtung 24 übertragen. Dort wird der Ladezustand aus dem ersten und zweiten Referenzwert sowie dem Betriebswert ermittelt.

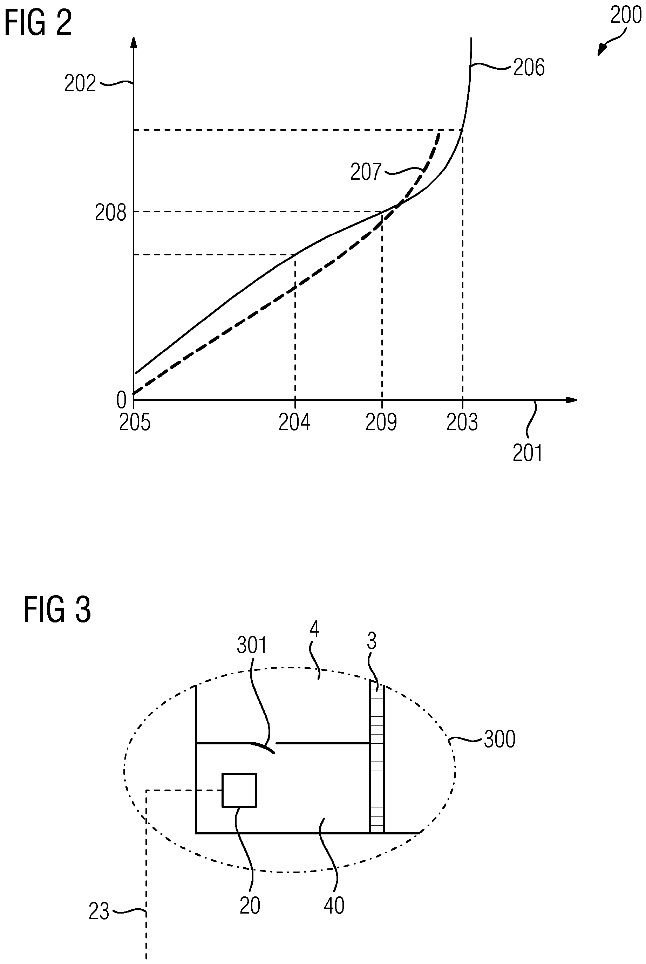

Figur 2 zeigt exemplarisch ein Elektrodenpotential-Diagramm. In diesem Diagramm ist auf der x-Achse die Kapazität 201 in Amperestunden aufgetragen. Auf der Y-Achse ist das Elektrodenpotential 202 in Millivolt gegenüber einem Referenzpotential aufgetragen. Es sind zwei Kurven zu sehen: die Abhängigkeit während des Ladens 206 sowie die Abhängigkeit während des Entladens 207. Insbesondere werden nun drei Werte vor dem Betrieb der Redox-Flow-Batterie 1 ermittelt. Es wird das Elektrodenpotential bei der maximalen Spannung 203 als zweiter Referenzwert gemessen. Weiterhin wird das Elektrodenpotential bei einer mittleren Spannung 204 als erster Referenzwert sowie bei einer Minimalspannung 205 gemessen. In diesem Beispiel wird dabei jeweils die Kurve des Beladens 206 verwendet. Nun wird die Redox-Flow Batterie 1 betrieben. Dabei wird mittels der über die Referenzwerte erstellten Kurve ein Zusammenhang des gemessenen Elektrodenpotentials 208 zur Kapazität des Betriebswertes 209 ermittelt.

Figur 3 zeigt eine alternative Anordnung der Messvorrichtung 20 in der Elektrodeneinheit 2. In dieser alternativen Anordnung ist die erste Messvorrichtung 20 eine pH-Sonde. Diese kann insbesondere in einem ersten Teilraum 40 angeordnet sein. Dieser ist von der ersten Kammer 4 abgetrennt und mittels einer verschließbaren Öffnung fluidisch mit der ersten Kammer 4 verbunden. Die verschließbare Öffnung wird von einem Ventil 301 steuerbar verschlossen. Vorteilhaft lässt sich der erste Teilraum 40 im Anschluss an die Messung spülen, wodurch die pH-Messsonde längere Betriebszeiten aufweist, da vermieden wird, dass sie ständig mit dem Katholyt 10 in Kontakt kommt. Analog ist es möglich, in der zweiten Kammer im Anolyt den pH-Wert mit der zweiten Messvorrichtung 21 zu messen. Das Ermitteln des Ladezustands aus dem ersten und zweiten Referenzwert und dem ersten Betriebswert erfolgt analog zum Elektrodenpotential in der Auswertevorrichtung 24 nachdem die Messwerte über die Datenübertragungsvorrichtung in 22 und 23 an die Auswertevorrichtung 24 übergeben wurden.

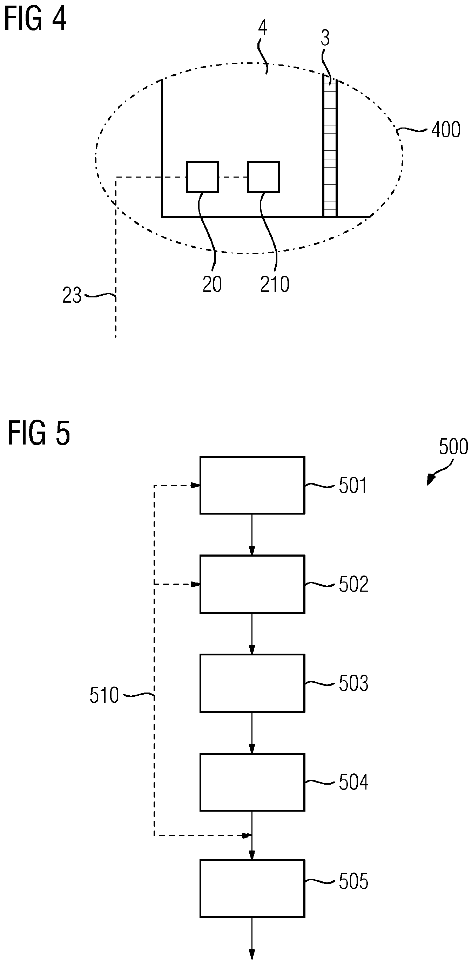

Figur 4 zeigt eine weitere Alternative Anordnung der Messvorrichtung 20. In dieser alternativen Anordnung 400 sind zwei Messvorrichtungen 20 und 210 redundant in der ersten Kammer 4 angeordnet. Alternativ können ebenso zwei Messsonden 20 redundant im ersten Tank 6 oder zwei Messsonden 21 im zweiten Tank 7 angeordnet sein. Diese Messvorrichtungen können Spannungsmessvorrichtung oder pH Elektroden darstellen. Dadurch wird die Zuverlässigkeit der Messung erhöht, wodurch auch die Zuverlässigkeit der Bestimmung des Ladezustands erhöht wird.

Figur 5 zeigt einen schematischen Überblick über das Verfahren zum Ermitteln des Ladezustands (englisch: State of Charge, SOC) 500. Zunächst wird ein zweiter Referenzwert bei einer Maximalspannung gemessen 501. Anschließend wird wenigstens ein erster Referenzwert gemessen 502. Der erste Referenzwert kann dabei ein pH-Wert oder das Elektrodenpotential im Anolyt 11 oder im Katholyt 12 sein. Anschließend wird während des Betriebs der Redox-Flow-Batterie 1 ein Betriebswert gemessen 503. Danach wird in einer Auswertevorrichtung 24 aus dem ersten Referenzwert, dem zweiten Referenzwert und dem Betriebswert der Ladezustand der Redox-Flow-Batterie 1 ermittelt 504. Zuletzt wird der Ladezustand über eine Ausgabevorrichtung 505 an einen Benutzer ausgegeben oder an eine übergeordnete Steuerung zur Steuerung der Batterie übermittelt. Die Ausgabevorrichtung kann insbesondere ein Display sein. Nachdem Ermitteln des Ladezustands in der Auswertevorrichtung 24 kann es von Zeit zu Zeit notwendig sein den ersten und/oder zweiten Referenzwert neu zu ermitteln 510.

### Bezugszeichenliste

- 1: Redox-Flow-Batterie
- 2: Redox-Flow Einheit
- 3: Membran
- 4: erste Kammer
- 5: zweite Kammer
- 6: erster Tank
- 7: zweiter Tank
- 8: erste Pumpe
- 9: zweite Pumpe
- 10: Katholyt
- 11: Anolyt
- 12: Elektroenergieanbindung
- 17: Kathode
- 18: Anode
- 20: erste Messsonde
- 21: zweite Messsonde
- 22: erste Datenübertragungsvorrichtung
- 23: zweite Datenübertragungsvorrichtung
- 24: Auswertevorrichtung
- 40: erster Teilraum
- 200: Elektrodenpotential-Diagramm
- 201: Kapazität
- 202: Elektrodenpotential
- 203: maximal Spannung
- 204: mittlere Spannung
- 205: Minimalspannung
- 206: beladen
- 207: entladen
- 210: zweite Messvorrichtung
- 300: erste alternative Anordnung der ersten Messsonde
- 301: Ventil
- 400: zweite alternative Anordnung der ersten Messsonde
- 500: Verfahrensschema
- 501: Messen des zweiten Referenzwertes
- 502: Messen des wenigstens einen ersten Referenzwertes
- 503: Messen des Betriebswertes
- 504: Ermitteln des Ladezustands in der aus Werteeinheit
- 505: Ausgeben des Ladezustands
- 510: Anpassen des ersten und/oder zweiten Referenzwert

## Patentansprüche

1. Verfahren zum Bestimmen eines Ladezustands einer Redox-Flow-Batterie (1) mit folgenden Schritten:
- Bereitstellen einer Redox-Flow-Batterie (1) umfassend eine erste Kammer (4) und eine zweite Kammer (5), wobei die erste Kammer (4) von der zweiten Kammer (5) von einer Membran (3) getrennt ist und wobei die erste Kammer (4) eine Kathode (17) umfasst und die zweite Kammer (5) eine Anode (18) umfasst und in der ersten Kammer (4) ein flüssiger Katholyt (10) vorliegt und in der zweiten Kammer (5) ein flüssiger Anolyt (11) vorliegt,
- Messen wenigstens eines ersten Referenzwertes bei einem ersten Ladezustand der Redox-Flow-Batterie (1) während des Aufladens (206) und/oder Entladens (207) der Redox-Flow-Batterie (1) und wenigstens eines zweiten Referenzwertes bei maximaler Ladung der Redox-Flow-Batterie (1) mittels einer ersten Messvorrichtung (20),
- Messen wenigstens eines ersten Betriebswertes in Abhängigkeit des Ladezustands während des Betriebs der Redox-Flow-Batterie (1) mittels der ersten Messvorrichtung (20),
- Ermitteln des Ladezustands aus dem wenigstens ersten Referenzwert, dem zweiten Referenzwert und dem wenigstens ersten Betriebswert der Redox-Flow-Batterie (1) in einer Auswertevorrichtung (24).

2. Verfahren nach Anspruch 1, wobei als der erste Betriebswert und der erste Referenzwert der pH-Wert und/oder das Elektrodenpotential gemessen wird.

3. Verfahren nach einem der vorhergehenden Ansprüche, wobei als der erste Ladezustand bei Minimalspannung oder der halben Maximalspannung der Redox-Flow-Batterie (1) gemessen wird.

4. Verfahren nach einem der Ansprüche 2 oder 3, wobei der pH-Wert im Katholyt (10) in einem ersten Tank (6) verbunden mit der ersten Kammer (4) oder im Anolyt (11) in einem zweiten Tank (7) verbunden mit der zweiten Kammer (5) gemessen wird.

5. Verfahren nach einem der Ansprüche 2 oder 3, wobei das Elektrodenpotential an der Anode (18) in der zweiten Kammer (5) oder der Kathode (17) in der ersten Kammer (4) gemessen wird.

6. Verfahren nach einem der vorhergehenden Ansprüche, wobei der Anolyt (11) und/oder der Katholyt (10) Polyoxometallat als Energieträger umfasst.

7. Elektrisch wiederaufladbare Redox-Flow-Batterie (1) umfassend:
- eine erste Kammer (4) und eine zweite Kammer (5), wobei die erste Kammer (4) von der zweiten Kammer (5) von einer Membran (3) getrennt ist und wobei die erste Kammer (4) eine Kathode (17) umfasst und die zweite Kammer (5) eine Anode (18) umfasst und in der ersten Kammer (4) ein Katholyt (10) vorliegt und in der zweiten Kammer (5) ein Anolyt (11) vorliegt,
- eine erste Messvorrichtung (20, 21) zum Messen eines ersten und eines zweiten Referenzwertes,
- eine erste Messvorrichtung (20, 21) zum Messen eines ersten Betriebswertes,
- eine Auswertevorrichtung (24) zum Ermitteln eines Ladezustands aus dem ersten Referenzwert und dem ersten Betriebswert.

8. Redox-Flow-Batterie (1) nach Anspruch 7, wobei die erste Messvorrichtung (20) eine Spannungsmessvorrichtung umfassend eine Referenzelektrode ist.

9. Redox-Flow-Batterie (1) nach Anspruch 7, wobei die erste Messvorrichtung (20) eine pH-Elektrode ist.

10. Redox-Flow-Batterie (1) nach Anspruch 9, wobei die pH-Elektrode in einem ersten Teilraum (40) der ersten Kammer (4) und/oder einem zweiten Teilraum der zweiten Kammer (5) angeordnet ist und der erste und zweite Teilraum (40) über eine verschließbare Öffnung mit der ersten und zweiten Kammer fluidisch verbunden sind.

11. Redox-Flow-Batterie (1) nach Anspruch 10, wobei die verschließbare Öffnung durch ein regelbares Ventil (301) verschließbar ist.

12. Redox-Flow-Batterie (1) nach Anspruch 9, wobei die pH-Elektrode in einer Zu- oder Ableitung der ersten und/oder zweiten Kammer (4, 5) angeordnet ist.

13. Redox-Flow-Batterie (1) nach Anspruch 12, wobei die pH-Elektrode mechanisch bewegbar in die Leitung und aus der Leitung heraus angeordnet ist.

14. pH-Elektrode zum Einsatz in einer Redox-Flow-Batterie mit wenigstens zwei Diaphragmen.

15. pH-Elektrode nach Anspruch 14, wobei die pH-Elektrode eine Glas-pH-Elektrode ist.
